# EUROPÄISCHE PATENTSCHRIFT

(11) **EP 1 602 544 B1**
(45) Veröffentlichungstag und Bekanntmachung des Hinweises auf die Patenterteilung: **05.01.2011**
(21) Anmeldenummer: 04013225.0
(22) Anmeldetag: 04.06.2004
(51) Int. Cl.: B60T 11/16, F15B 15/28

(54) **Hydraulikzylinder**
Hydraulic master cylinder
Maître-cylindre hydraulique

(43) Veröffentlichungstag der Anmeldung: 07.12.2005
(73) Patentinhaber: ZF Friedrichshafen AG, 88038 Friedrichshafen (DE)
(72) Erfinder: Ludsteck, Sven, 97702 Reichenbach (DE); Gebauer, Dieter, 97505 Geldersheim (DE); Tulaczko, Boleslaw, 97453 Schonungen (DE)

(56) Entgegenhaltungen:
- EP-A- 1 391 615
- DE-A- 4 341 810
- US-A- 4 896 584
- US-A1- 2003 172 651
- US-A1- 2004 020 201

## Beschreibung

Die Erfindung betrifft einen Hydraulikzylinder, insbesondere einen Geberzylinder, gemäß dem Oberbegriff des Patentanspruchs 1.

Eine solcher Hydraulikzylinder, Kolben-Zylinder-Aggregat ist beispielsweise aus der DE 199 15 832 A1 bekannt und dient beispielsweise der Betätigung einer hydraulischen Kupplungs oder Bremsvorrichtung. Das Kolben-Zylinder-Aggregat, das in diesem Beispiel einen Geberzylinder darstellt, wird über das Brems- oder Kupplungspedal, welches mit der Kolbenstange des Zylinders in Verbindung steht, aktiviert. Der im Geberzylinder erzeugte hydraulische Druck wird über ein mit Hydraulikflüssigkeit befülltes Leitungssystem an einen Nehmerzylinder übertragen, welcher dort eine Verschiebung eines Arbeitskolbens bewirkt und damit z.B. einen Kupplungsausrücker betätigen kann. Des Weiteren weist das genannte Kolben-Zylinder-Aggregat ein Sensorsystem auf, welches der Erkennung der Stellung des Kolbens innerhalb des Zylinders dient. Dazu ist am Außenumfang des Kolbens eine zur Zylinderinnenwand offene Ringnut ausgebildet, an der ein ringförmiger Permanentmagnet angeordnet ist, welcher mit dem Kolben entlang der Innenwandung des Zylinders axial verschiebbar ist. An der Außenwandung des Zylindergehäuses ist ein Aufnahmeteil befestigt, in dem zwei Hall-Schalter angeordnet sind, deren Axialabstand einer Anfangs- und einer Endposition des Kolbens entspricht und die auf das Magnetfeld des am Kolben befindlichen Permanentmagneten ansprechen und beim Vorbeigleiten des Permanentmagneten einen Schaltvorgang bzw. ein elektrisches Signal auslösen. Zur Weitergabe des Signals an Steuer- oder Kontrollstrukturen besitzt das Aufnahmeteil ein elektrisches Anschlusskontaktteil.

Der genannten Druckschrift sind keine detaillierten Angaben darüber entnehmbar, wie der Permanentmagnet am Kolben befestigt ist. Angesichts der einzigen Figur kann jedoch davon ausgegangen werden, dass in einem ersten Arbeitsschritt der Kolben gefertigt wird und in einem weiteren Arbeitsschritt der Ringmagnet von der dem Druckraum abgewandten Seite des Kolbens in die Ringnut des Kolbens aufgeschoben wird. Dabei ist von Nachteil, dass bei diesem Zusammenbau von Kolben und Permanentmagnet auch bei größter Sorgfalt ein nachträgliches Lösen des Permanentmagneten von der Montageposition am Kolben infolge von plötzlichen, schockartigen Belastungen des Kolbens nicht ausgeschlossen werden kann und somit die Positionserkennung des Kolbens fehlerhaft erfolgen kann. Im Extremfall kann der Permanentmagnet zerbersten, was zu einer Blockierung des Kolbens und damit zum Ausfall des hydraulischen Systems führen kann. An dem Sensorsystem fällt auf, dass die Hallschalter lediglich an einer Umfangsposition angeordnet sind, währens der Permanentmagnet rotationssymmetrisch gestaltet ist, was üblicherweis wegen der freien Drehbarkeit des Kolbens um dessen Längsachse so ausgeführt ist, damit der Kolben in jeder Drehlage ein Signal erzeugen kann.

Dokument US 2003/0172651 A offenbart einen Hydraulikzylinder gemäß dem Oberbegriff des Anspruchs 1.

Von dem genannten Stand der Technik ausgehend, liegt der Erfindung die Aufgabe zugrunde, einen Hydraulikzylinder mit einem verbesserten und kostengünstigeren Sensorsystem vorzuschlagen.

Die vorstehend genannte Aufgabe wird durch einen gattungsgemäßen Hydraulikzylinder mit den im Kennzeichen des Patentanspruchs 1 angegebenen Merkmale gelöst. Vorteilhafte Weiterbildungen und Ausgestaltungen der Erfindung sind in den Unteransprüchen angegeben.

Die Erfindung geht von der Überlegung aus, dass bei einem aus dem Stand der Technik bekannten Hydraulikzylinder mit einem Sensorsystem der Permantmagnet nur deswegen ringförmig ausgebildet und symmetrisch zur Mittelachse des Kolbens angeordnet ist, weil sich der Kolben im Wesentlichen frei um diese Mittelachse drehen kann. Des Weiteren muss sich, um ein verwertbares Signal zu erzeugen, in jeder Drehlage des Kolbens der an diesem angeordnete Magnet im Erfassungsbereich eines oder mehrerer an der Außenseite des Zylindergehäuses an einer bestimmten, festen Umfangsposition angebrachten Sensoren befinden.

Wird, so wie es die Erfindung vorschlägt, der Permanentmagnet radial über eine Kolbenlauffläche herausstehend und in eine am Druckmittelzylinder ausgebildete Axialnut eingreifend angeordnet, so kann der Magnet um ein Mehrfaches kompakter, d.h. wesentlich kleiner dimensioniert werden. Gleichfalls kann auch das Sensorsystem, insbesondere der Sensor in dessen Baugröße verkleinert werden.

Die Erfindung wird nachfolgend unter Bezugnahme auf die beigefügten Figuren anhand eines bevorzugten Ausführungsbeispiels an einem Geberzylinder für eine Kraftfahrzeugkupplung erläutert. Es zeigen:
- Fig. 1a: eine Axialschnittdarstellung eines nicht erfindungsgemäßen Hydraulikzylinders mit einer Nachlaufein- richtung,
- Fig. 1b: ein Ausschnitt des Hydraulikzylinders der Fig. 1a mit einer im Bereich der Primärdichtung angeordneten Ringscheibe,
- Fig.2: eine schematische Darstellung der erfindungsgemäßen Anordnung eines Permanentmagneten an einem Kolben eines Hydraulikzyklinders in einem Radialschnitt,
- Fig. 3: eine weitere erfindungsgemäßen Anordnungsvariante eines Permanentmagneten an einem Kol- ben.

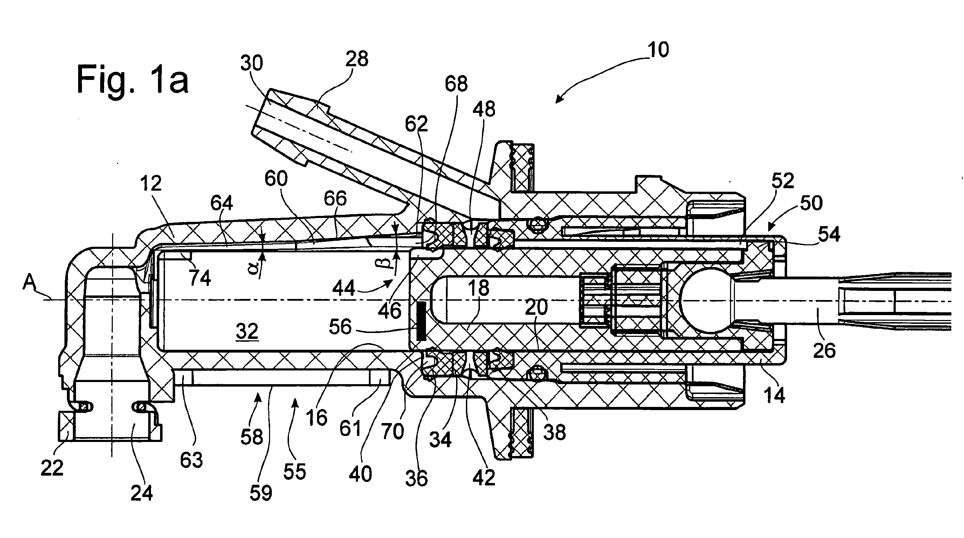

Die Fig.1a zeigt eine Axialschnittdarstellung eines Hydraulikzylinders 10 mit einer Nachlaufeinrichtung, welcher als Geberzylinder für eine hydraulische Betätigungseinrichtung zur Betätigung einer Kraftfahrzeugkupplung ausgebildet ist. Der Geberzylinder 10 weist ein Kunststoff-Gehäuse 12 und ein, in einer Stufenbohrung angeordnetes, fest mit dem Gehäuse 12 verbundenes Führungsrohr 14 auf, welche eine gemeinsame Laufbuchse 16 für einen in dem Zylinder 10 axial beweglichen Kunststoff-Kolben 18 mit einer Lauffläche 20 bilden.

Das Gehäuse 12 umfasst an der Stirnseite einen Fluidanschluss 22 mit einem Fluidkanal 24, der über eine dort verbindbare Fluidleitung mit einem zeichnerisch nicht dargestellten Nehmerzylinder in Fluidverbindung steht. Der Kolben 18 des Geberzylinders 10 steht über eine schwenkbeweglich an diesem angeordnete Kolbenstange 26 mit einem nicht dargestellten Kupplungspedal in Wirkverbindung, bei dessen Betätigung sich der Kolben 26 in der Figur nach links verschiebt und über die Fluidverbindung den Nehmerzylinder und eine mit diesen verbundene Kupplungsgabel zum Ausrücken der Fahrzeugkupplung steuert.

Von der Mantelfläche des Gehäuses steht ein Nachlaufanschluss 28 ab, der mit einem darin ausgeführten Nachlaufkanal 30 mit einem nicht dargestellten Fluid-Nachlaufbehälter kommuniziert.

Die Stirnseite des Kolbens 18 und die Innenwandung des Zylindergehäuses 12 definieren einen variablen Druckraum 32, welcher gegenüber dem beweglichen Kolben 18 gegen die Umgebung abgedichtet ist. Dazu sind am Gehäuse 12 zwei, durch einen Zwischenring 34 beabstandete Ringlippendichtungen 36, 38 angeordnet, die jeweils mit einer Dichtlippe am Gehäuse 12 und mit einer zweiten Dichtlippe an der Lauffläche 20 des Kolbens 18 anliegen. Die axial zwischen dem Nachlaufkanal 30 und dem Druckraum 32, an einem Gehäuseabsatz 40 anliegende erste Dichtung (Primärdichtung 36) dichtet den Druckraum 32 gegenüber einen durch den Zwischenring 34 gebildeten ringförmigen Nachlaufbereich 42 ab. Die zweite, am Ende des Führungsrohres 14 befindliche Ringlippendichtung (Sekundärdichtung 38) dient der dichten Abtrennung des Nachlaufbereichs 42 von der Atmosphäre. Alternativ kann die Sekundärdichtung 28 auch im Gehäuse angeordnet werden.

Um ein Nachlaufen von Hydraulikflüssigkeit in und das Entweichen von Gasblasen aus dem Druckraum 32 sicherzustellen, weist der Geberzylinder 10 eine Nachlaufeinrichtung 44 auf. Zu diesem Zweck sind an der Kolbenlauffläche 20 Nachlaufmittel 46 in Form einer sich von dessen Stirnseite aus in axialer Richtung erstreckenden offenen Ausgleichs- bzw. Nachlaufnuten angeordnet. Die Erstreckung ist so gewählt, dass die Primärdichtung 36 in der dargestellten Endstellung des Kolbens 18 überbrückt wird und ein Ausgleichskanal 48 vom Druckraum 32 ausgehend über die Nachlaufnut 46 zum Nachlaufbereich 42 und weiter zum Nachlaufkanal 30 freigegeben wird. Die Fluidverbindung zwischen dem Nachlaufbereich 42 und dem Nachlaufkanal 30 sowie dem Druckraum 32 wird durch in der Figur verdeckte Kanäle im Zwischenring 34 sichergestellt. Bei einer Bewegung des Kolbens 18 in die den Druckraum 32 verkleinernde Richtung wird die Nachlaufnut 46 aus dem Bereich der Primärdichtung 36 herausbewegt, wodurch sich die Primärdichtung 36 vollständig an die Kolbenlauffläche 20 anlegt und damit die Verbindung zwischen dem Druckraum 32 und dem Nachlaufkanal 30 unterbricht. Anstelle einer offen Nut 46 können die Nachlaufmittel 46 auch an der gezeigten Position als geschlossene Nut, d.h. im wesentlichen als Axialbohrung ausgeführt werden, welche mit einer nach radial aussen geführten seitlichen Bohrung, d.h. einem Stichkanal verbunden ist. Der Stichkanal mündet in der in Fig. 1a gezeigten Kolbenstellung unmittelbar hinter der mit dem Kolben 18 zusammenwirkenden Dichtlippe der Primärdichtung 36 in den Nachlaufbereich 42.

Wie aus der Fig.1a ersichtlich, ist die Nachlaufnut 46 am Kolben 18 auf einer im Wesentlichen gleichen Umfangslage bezüglich des Gehäuses 12 wie der in den Nachlaufbereich 42 mündende Nachlaufkanal 30 angeordnet, so dass der Ausgleichskanal 48 im Nachlaufbereich 42 möglichst kurz bemessen ist.

Zur Beibehaltung der gegenseitigen Drehlage der Nachlaufmittel, d.h. der Ausgleichsnut und dem Gehäuse 12 weist der Geberzylinder 10 eine Verdrehsicherung 50 mit einer axialen Führungsnut 52 im Führungsrohr 14 und einer in diese eingreifende und axial von dieser geführten Nase 24 am Kolben 18 auf.

In der oberen Wandung des Druckraums ist zur weiteren Unterstützung der Entlüftung eine optionale Entlüftungsnut 60 angeordnet, welche einen dem Nachlaufkanal 30 nahen Abschnitt 62 und einen dem Nachlaufkanal 30 fernen Abschnitt 64 aufweist. Der dem Nachlaufkanal 30 ferne Abschnitt 64 hat einen gegenüber der Horizontalen um einen Winkel α von 1,5° zu dem Nachlaufkanal 30 hin ansteigenden Nutgrund 66. Der dem Nachlaufkanal 30 nahe Abschnitt 62 weist einen zu diesem um den Winkel β, der etwa 5° beträgt, gegenüber der Horizontalen ansteigenden Nutgrund 66 auf und erstreckt sich ungefähr über ein Drittel der Länge des Druckraums 32. Insbesondere der dem Nachlaufkanal 30 nahe Abschnitt 62 bildet innerhalb des Druckraums 32 einen Sammelabschnitt 68 für Gasblasen, welche sich unmittelbar vor der Primärdichtung 36 ansammeln und in der eingezeichneten Stellung des Kolbens 18, in der sich die Nachlaufnut 46 im Bereich der Primärdichtung 36 befindet, über die Nachlaufnut 46 und den Nachlaufkanal 30 entweichen können.

Bei einem Unterdruck im Druckraum 32 strömt über die Nachlaufnut 46 zudem Hydraulikfluid in diesen nach. Vorteilhafterweise entspricht der Querschnitt der Nachlaufnut 46 mindestens dem Querschnitt der Entlüftungsnut 46 im Bereich der Primärdichtung 36. Damit wird bei relativ großen Gasansammlungen eine Aufstauung an dem Ausgleichskanal 46 bei einem Entlüftungsvorgang vermieden.

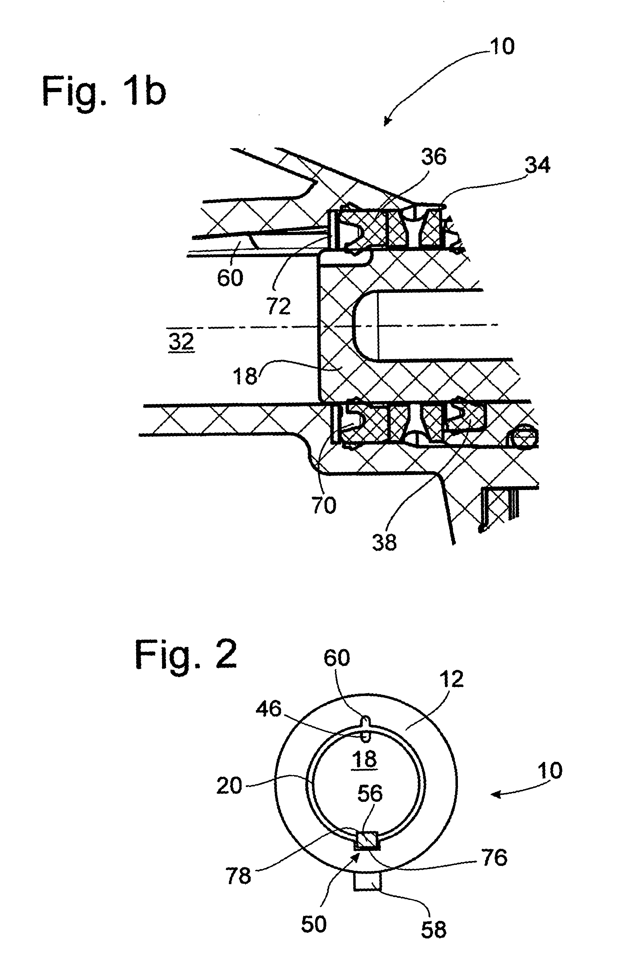

Zur Vermeidung eines Übertritts von Restgas aus dem Druckraum 32 in die von den Dichtlippen der Primärdichtung 36 aufgespannte Ringnut 70 kann ein zusätzliches Deckelement 72, bspw. eine Ringscheibe 72 zur Abdeckung der Ringnut 70 eingebracht werden, wie dieses in dem Ausschnitt der Fig. 1b gezeigt ist. Die Ringscheibe 72 wird dazu zwischen der Primärdichtung 36 und dem Absatz 40 zentriert von dem Gehäuse 12 aufgenommen, wobei deren Innendurchmesser so bemessen ist, dass die Lauffläche 20 des Kolbens 18 berührungsfrei vorbeigleiten kann.

Der Hydraulikzylinder 10 ist zum Einbau in einer horizontalen Lage vorgesehen. Hierbei entspricht die Mittelachse A des Hydraulikzylinders 10 der Horizontalen. Der Hydraulikzylinder 10 kann auch mit seinem Anschluß 22 für die Druckleitung nach oben hin um einen gegenüber dem Winkel α kleineren oder gleich großen Winkel zur Horizontalen geneigt angeordnet werden.

Alternativ zu der Ausbildung einer einzigen Nachlaufnut 46 kann der Kolben 18 auch mehrere derartiger Nuten 46 aufweisen. Die eine oder mehreren Nachlaufnuten 46 sind vorzugsweise am Kolben 18 am geodätisch höchsten Bereich und benachbart zum Gassammelabschnitt 68 ausgebildet. Bei der in der Figur dargestellten horizontalen Lage sind die Nachlaufnuten 46 in der oberen Halbebene des Kolbens 18, und besonders bevorzugt nahe zum Nachlaufkanal 30 und günstigerweise ebenso im Bereich der Entlüftungsnut 60 positioniert.

Zusätzlich können auch eine oder mehrere Ausgleichsnuten 46 ausserhalb des mit dem Gassammelabschnitt 68 zusammenwirkenden Kolbenbereichs ausgebildet werden. Jedoch sind die Ausgleichsnuten 46 insgesamt so anzuordnen und zu dimensionieren, dass sich bei einer Entlüftung die unten beschriebene Wirkung einstellen kann.

Bei einem Entlüftungsvorgang mit einer Kolbenbewegung in den Druckraum 32 hinein wird beim Vorhandensein einer Gasansammlung in der Entlüftungsnut 60 oder wenn diese nicht ausgebildet ist im geodätisch oberen Volumenbereich des Druckraumes 32 Fluid verdrängt und hat dort einen ansteigenden Fluidpegel zur Folge, da das Fluid über die ggf. ausserhalb des Gassammelabschnittes 68 angeordneten Ausgleichsnuten nur ungenügend schnell aus dem Druckraum entweichen kann. In Folge werden die im Gassammelabschnitt 68 vorhandenen Gase zunächst komprimiert und anschließend über die zu diesem unmittelbar benachbarten, d.h. in diesem Zustand in direkter Strömungsverbindung stehenden Nachlaufmitteln 46 mit dem überschüssigen, verdrängten Fluid aus dem Druckraum 32 geschoben bzw. herausgepresst.

Zur Erzielung einer möglichst vollständigen Entgasung des Druckraumes 32 ist es von besonderer Bedeutung, die Strömungsgeschwindigkeit des Fluids in der oder den Ausgleichsnuten 46 möglichst hoch einzustellen, was bei einem vorgegebenen Kolbenquerschnitt durch eine geeignete Wahl des Nutquerschnitts in Verbindung mit der Nutanzahl einfach erfolgen kann.

Am stirnseitigen Ende des Druckraums 32 kann zusätzlich ein kurzer, sich axial erstreckender Steg 74 ausgebildet sein, der bei Erreichen der eingeschobenen Endposition des Kolbens 18 dort formschlüssig in die Ausgleichsnut 46 eingreift und sich in der Ausgleichsnut aufstauende, jedoch nach dem Passieren der Primärdichtung 36 nicht mehr über diese abführbare Gasansammlungen aus der Nut 46 verdrängt, worauf sich diese in die Entlüftungsnut 60 ausweichen und in dieser in Richtung der Primärdichtung 36 nach oben ansteigen können, um bei einem nächsten Entlüftungsvorgang aus dem Druckraum 32 zu entweichen.

Der Hydraulikzylinder 10 umfasst gemäß Fig. 1a ein Sensorsystem 55 zur Detektion einer Kolbenstellung, wobei am Kolben 18 ein stabförmiger Permanentmagnet 56 und an der Außenseite des Gehäuses 12 oder alternativ an der Führungshülse 14 eine Detektoreinheit 58 zur Erfassung einer von dem Permanentmagnet 56 induzierten Magnetfeldänderung angeordnet sind.

Die Detektoreinheit 58 umfasst ein Sensorgehäuse 59, in dem zwei magnetfeldempfindliche Sensoren 61, 63, z.B. Hall-Sensoren oder Reed-Kontakte enthalten sind. Alternativ können auch kontinuierlich arbeitende kapazitive oder induktive Wegaufnehmer als Sensoren eingesetzt werden. Die axiale Positionierung des Permanentmagneten 56 am Kolben 18 ist prinzipiell frei wählbar, jedoch ist an der dargestellten Position der axiale Abstand des Magneten 56 zum Druckraum 32 minimiert, wodurch sich ein konstruktiver Vorteil bei der Positionierung der Sensoren 61, 63 und des Sensorgehäuses 59 ergibt, welches platzsparend im vorderen Bereich des Zylindergehäuses 12 und somit unmittelbar axial im Bereich des Druckraumes 32 ausgebildet werden kann. Der Permanentmagnet 56 und die Sensoren 61, 63 befinden sich im Wesentlichen auf derselben Umfangslage. Vorteilhafterweise ist der Magnet 56 mit einem seiner beiden Magnetpole auf die Sensoren 61, 63 ausgerichtet, damit diese von dem dort besonders stark ausgeprägten Magnetfeld beaufschlagt werden können.

Der axiale Abstand der Sensoren 61, 63 entspricht dabei etwa einer Anfangs- und einer Endstellung des Kolbens 18. In Fig. 1a befindet sich der Kolben 18 zwar axial abseits der Position des Sensors 61, jedoch noch innerhalb dessen Erfassungsbereiches. Bei einer Axialbewegung des Kolbens 18 in dessen Laufbuchse 16 wird der jeweils axial dem Permanentmagneten 56 nächstliegende Sensor 24 bzw. 26 von dessen Magnetfeld erfasst und kann daraufhin eine Schaltbewegung ausführen und/oder erzeugt ein elektrisches Signal, welches über eine nicht dargestellte Signalleitung an eine Auswerteeinheit zur weiteren Bearbeitung weitergeleitet wird. Es können auch beide Sensoren 61, 63 gleichzeitig mit dem Magnetfeld des Permanentmagneten 56 beaufschlagt werden, wobei aus dem jeweils resultierenden Signalverhältnis der Sensoren 61, 63 die Position des Kolbens 18 ermittelt werden kann.

In den verdrehsicher in der Laufbuchse 16 geführten Kolben 18 ist, wie in der Figur zu erkennen, asymmetrisch zur Kolben- und zur Zylindermittellinie A der Permanentmagnet 56 eingesetzt, der zumindest im Bereich der Kolbenlauffläche 20 vollständig vom Kunststoffmaterial des Kolbens 18 umgeben ist. Somit ist der Magnet 56 einerseits gegen Korrosionserscheinungen sicher geschützt, andererseits wird die Lauffläche 20 des Kolbens 18 nicht unterbrochen, was einen verschleißarmen, langlebigen Betrieb des Hydraulikzylinders 10 garantiert.

Zur Anordnung des Permanentmagneten 56 im Hydraulikzylinder 10 kann die Verdrehsicherung 50 erfindungsgemäß unter dessen Mitwirkung selbst ausgeführt werden, wie dieses in Fig. 2 dargestellt ist. Dazu ist der Magnet 56 so in den Kolben 18 eingesetzt, dass dieser radial etwas über die Kolbenlauffläche 20 heraussteht. Der überstehende Bereich des Magneten 56 greift in eine am Druckraum 32 ausgebildete Axialnut 76 ein und wird von dieser verdrehsicher gehalten. Beispielsweise genügt es, an der Lauffläche 20 eine Ausnehmung 78 als Aufnahmebereich vorzusehen und einen scheibenförmigen Permanentmagneten 56 in diese einzusetzen. Da dieser in der Nut 76 geführt wird, ist im montierten Zustand des Zylinders 10 gleichzeitig eine verliersichere Anordnung gegeben, d.h. der Permanetmagnet 56 braucht in der Ausnehmung 78 nur zum Zweck seiner Montage fixiert werden. Jedoch sollte ein Axialspiel zwischen dem Magnet 56 und dessen Aufnahmebereich 78 vermieden werden, da dieses einer exakten Stellungsdetektion des Kolbens 18 entgegensteht.

Die erläuterte Variante hat den Vorteil, dass die Nase 54 am Kolben entfallen kann und dass der Permanentmagnet 56 wesentlich näher an der Detektoreinheit 58 geführt werden kann, als dieses bisher bekannt ist. Daraus ergibt sich der weitere Vorteil, dass weniger massiv ausgeführt werden kann und gleichzeitig die Detektoreinheit 58 eine geringere Ansprechempfindlichkeit aufweisen kann.

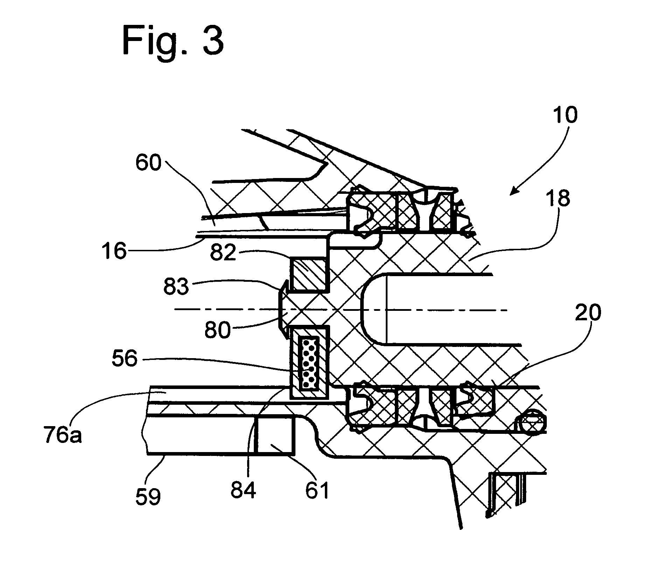

Alternativ kann der Permanentmagnet 56, wie in dem Ausschnitt der Fig. 3 dargestellt, erfindungsgemäß auch an einem zum Druckraum 32 am Kolben 18 ausgebildeten Axialfortsatz 80 angeordnet sein. Auf dem Axialfortsatz 80 ist ein vorzugsweise aus Kunststoff gefertigtes Aufnahmeelement 82 drehfrei, jedoch axial fixiert gelagert. Dazu kann das Aufnahmelement 82 mittels einer Einweg-Rastvorrichtung, einer Schnappverbindung oder eines anderen Sicherungsmittels 83 am Kolben 18 axial möglichst spielfrei und unlösbar gesichert sein. Das Aufnahmeelement 82 weist eine radial abstehende und die Lauffläche 20 des Kolbens 18 überragende Nase 84 bzw. Zapfen auf, die in eine Axialnut 76a eingreifen kann, welche zu der Entlüftungsnut 60 am Druckraum 32 gegenüberliegend ausgebildet ist. Der Magnet 56 ist vorzugsweise in das Aufnahmelement 82 eingegossen, wobei alternativ auch andere Befestigungsmethoden, wie zum Beispiel das Einlassen, Einschnappen oder Einpressen in eine Ausnehmung wie in Fig. 2 gezeigt, eine Rastverbindung oder ähnliches möglich sind.

Bei dieser Variante bleibt die freie Drehbarkeit des Kolbens, sofern diese nicht anderweitig eingeschränkt ist, erhalten und lediglich das Aufnahmeelement 82 mit dem Magnet 56 sind verdrehgesichert zum Gehäuse 12 und damit zu den Sensoren 61, 63 festgelegt.

Als Werkstoff für den Permanentmagneten 56 eignet sich besonders gut eine Legierung des Materialsystems Eisen-Neodym-Bor (FeNdB), mit der eine besonders hohe magnetische Flußdichte darstellbar ist. Befindet sich der Magnetwerkstoff mit dem Fluid in unmittelbaren Kontakt, so empfiehlt sich das Aufbringen einer Oberflächenkorrosionsschutzschicht, bspw. eines Nickelüberzugs.

Durch die asymmetrische Anordnung des Permanentmagneten 56 kann die Detektoreinheit 58 insgesamt sehr kompakt und kostengünstig dargestellt und eine erhebliche Menge von kostenintensiven Magnetmaterial eingespart werden.

### Bezugszeichenliste

- 10: Hydraulikzylinder
- 12: Zylindergehäuse
- 14: Führungsrohr
- 16: Laufbuchse
- 18: Kolben
- 20: Lauffläche
- 22: Fluidanschluß
- 24: Fluidkanal
- 26: Kolbenstange
- 28: Nachlaufanschluß
- 30: Nachlaufkanal
- 32: Druckraum
- 34: Zwischenring
- 36: Primärdichtung
- 38: Sekundärdichtung
- 40: Gehäuseabsatz
- 42: Nachlaufbereich
- 44: Nachlaufeinrichtung
- 46: Nachlaufmittel
- 48: Ausgleichskanal
- 50: Verdrehsicherung
- 52: Führungsnut
- 54: Nase
- 55: Sensorsystem
- 56: Permanentmagnet
- 58: Detektoreinheit
- 59: Sensorgehäuse
- 60: Entlüftungsnut
- 61, 63: Sensoren
- 62: naher Abschnitt
- 64: ferner Abschnitt
- 66: Nutgrund
- 68: Gassammelabschnitt
- 70: Ringnut
- 72: Ringscheibe
- 74: Axialsteg
- 76, 76a: Axialnut
- 78: Aufnahmebereich
- 80: Axialfortsatz
- 82: Aufnahmeelement
- 83: Sicherungsmittel
- 84: Zapfen

## Patentansprüche

1. Hydraulikzylinder für ein hydraulisches System, insbesondere Geberzylinder für eine hydraulische Betätigungseinrichtung zum Betätigen einer Fahrzeugkupplung, umfassend:
- ein Gehäuse (12) mit einer darin ausgebildeten Laufbuchse (16) für einen in dem Gehäuse (12) längsverschieblich geführten Kolben (18), der einen variablen Druckraum (32) begrenzt,
- eine im Gehäuse (12) angeordnete Primärdichtung (36), die den Druckraum (32) gegenüber dem Atmosphärendruck abdichtet, und
- ein Sensorsystem (55) zur Sensierung der Stellung des Kolbens (18) in dem Hydraulikzylinder (10), welches einen an dem Kolben (18) angeordneten Permanentmagneten (56) und mindestens einen ortsfest angeordneten magnetfeldempfindlichen Sensor (61, 63) umfasst, wobei der Permanentmagnet asymmetrisch zur Kolben- und Zylindermittellinie und drehfest am Kolben angeordnet ist,
**dadurch gekennzeichnet,**
**dass** der Permanentmagnet (56) radial über eine Kolbenlauffläche (20) heraussteht und in eine am Druckmittelzylinder (10) ausgebildete Axialnut (76, 76a) eingreift.

2. Hydraulikzylinder nach Anspruch 1,
**dadurch gekennzeichnet,**
**dass** der Permanentmagnet (56) am Hydraulikzylinder (10) im Wesentlichen auf derselben Umfangslage wie der Sensor (61, 63) angeordnet ist.

3. Hydraulikzylinder nach einem der vorhergehenden Ansprüche,
**dadurch gekennzeichnet,**
**dass** der Permanentmagnet (56) mit einem seiner beiden Magnetpole auf den Sensor (61, 63) ausgerichtet ist.

4. Hydraulikzylinder nach einem der vorhergehenden Ansprüche,
**dadurch gekennzeichnet,**
**dass** der Permanentmagnet (56) an der zum Druckraum (32) gewandten Stirnseite des Kolbens (18) angeordnet ist.

5. Hydraulikzylinder nach einem der vorhergehenden Ansprüche,
**dadurch gekennzeichnet,**
**dass** der Kolben (18) aus einem Kunststoff gefertigt ist.

6. Hydraulikzylinder nach einem der vorhergehenden Ansprüche,
**dadurch gekennzeichnet,**
**dass** der Permanentmagnet (56) in einem am Kolben (18) ausgebildeten Aufnahmebereich (78) angeordnet ist.

7. Hydraulikzylinder nach einem der Ansprüche 1 bis 5,
**dadurch gekennzeichnet,**
**dass** der Permanentmagnet (56) an einem drehbar am Kolben (18) gelagerten Aufnahmelement (82) angeordnet ist, wobei das Aufnahmelement (82) in der Axialnut (76a) drehfest geführt wird.

## Claims

1. Hydraulic cylinder for a hydraulic system, in particular master cylinder for a hydraulic actuating device for actuating a vehicle clutch, comprising:
- a housing (12) having formed therein a liner (16) for a piston (18) which is guided in a longitudinally movable fashion in the housing (12) and which delimits a variable pressure chamber (32),
- a primary seal (36) which is arranged in the housing (12) and which seals off the pressure chamber (32) with respect to atmospheric pressure, and
- a sensor system (55) for sensing the position of the piston (18) in the hydraulic cylinder (10), which sensor system (55) comprises a permanent magnet (56) arranged on the piston (18) and at least one positionally fixedly arranged sensor (61, 63) which is sensitive to magnetic fields, with the permanent magnet being arranged asymmetrically with respect to the piston and cylinder centre line and rotationally fixedly on the piston, **characterized**
**in that** the permanent magnet (56) projects radially beyond a piston running surface (20) and engages into an axial groove (76, 76a) formed on the pressure medium cylinder (10).

2. Hydraulic cylinder according to Claim 1,
**characterized**
**in that** the permanent magnet (56) is arranged on the hydraulic cylinder (10) at substantially the same circumferential location as the sensor (61, 63).

3. Hydraulic cylinder according to one of the preceding claims,
**characterized**
**in that** the permanent magnet (56) is aligned with one of its two magnet poles towards the sensor (61, 63).

4. Hydraulic cylinder according to one of the preceding claims,
**characterized**
**in that** the permanent magnet (56) is arranged on that end side of the piston (18) which faces towards the pressure chamber (32).

5. Hydraulic cylinder according to one of the preceding claims,
**characterized**
**in that** the piston (18) is produced from a plastic.

6. Hydraulic cylinder according to one of the preceding claims,
**characterized**
**in that** the permanent magnet (56) is arranged in a receiving region (78) formed on the piston (18).

7. Hydraulic cylinder according to one of Claims 1 to 5,
**characterized**
**in that** the permanent magnet (56) is arranged on a receiving element (82) which is rotatably mounted on the piston (18), with the receiving element (82) being guided rotationally fixedly in the axial groove (76a).

## Revendications

1. Cylindre hydraulique pour un système hydraulique, notamment maître-cylindre pour un dispositif de commande hydraulique destiné à actionner un embrayage de véhicule, comprenant :
- un boîtier (12) avec un manchon coulissant (16) réalisé dans celui-ci pour un piston (18) guidé de manière déplaçable longitudinalement dans le boîtier (12), lequel limite un espace de pression variable (32),
- un joint d'étanchéité primaire (36) disposé dans le boîtier (12), qui étanchéifie l'espace de pression (32) vis-à-vis de la pression atmosphérique, et
- un système de capteur (55) pour détecter la position du piston (18) dans le cylindre hydraulique (10), lequel comprend un aimant permanent (56) disposé au niveau du piston (18) et au moins un capteur sensible aux champs magnétiques (61, 63) disposé fixement, l'aimant permanent étant disposé de manière asymétrique par rapport à l'axe médian du piston et du cylindre et également de manière solidaire en rotation sur le piston,
**caractérisé en ce que**
l'aimant permanent (56) dépasse radialement au-delà d'une surface de roulement du piston (20) et pénètre dans une rainure axiale (76, 76a) réalisée sur le cylindre de fluide sous pression (10).

2. Cylindre hydraulique selon la revendication 1,
**caractérisé en ce que**
l'aimant permanent (56) est disposé sur le cylindre hydraulique (10) essentiellement dans la même position périphérique que le capteur (61, 63).

3. Cylindre hydraulique selon l'une quelconque des revendications précédentes,
**caractérisé en ce que**
l'aimant permanent (56) est orienté avec l'un de ses deux pôles magnétiques vers le capteur (61, 63).

4. Cylindre hydraulique selon l'une quelconque des revendications précédentes,
**caractérisé en ce que**
l'aimant permanent (56) est disposé sur le côté frontal du piston (18) opposé à l'espace de pression (32).

5. Cylindre hydraulique selon l'une quelconque des revendications précédentes,
**caractérisé en ce que**
le piston (18) est fabriqué en un plastique.

6. Cylindre hydraulique selon l'une quelconque des revendications précédentes,
**caractérisé en ce que**
l'aimant permanent (56) est disposé dans une région de réception (78) réalisée sur le piston (18).

7. Cylindre hydraulique selon l'une quelconque des revendications 1 à 5,
**caractérisé en ce que**
l'aimant permanant (56) est disposé sur un élément de réception (82) monté de manière rotative sur le piston (18), l'élément de réception (82) étant guidé de manière solidaire en rotation dans la rainure axiale (76a).
